# EUROPEAN PATENT APPLICATION

(11) **EP 4 567 397 A1**
(43) Date of publication of application: **11.06.2025**
(21) Application number: 24214481.4
(22) Date of filing: 21.11.2024
(51) Int. Cl.: G01L 19/06

(54) **MICROELECTROMECHANICAL SENSOR WITH EXTERNAL FLUIDIC COUPLING HAVING CONTAMINATION-REDUCING STRUCTURE**

(30) Priority: 06.12.2023 IT 202300026169
(71) Applicant: STMicroelectronics International N.V., 1228 Plan-les-Ouates, Geneva (CH)
(72) Inventor: DANIELE, Filippo, 20149 MILANO (IT); BALDO, Lorenzo, 20010 BAREGGIO (MI) (IT); NICOLI, Silvia, 20836 BRIOSCO (MB) (IT)
(74) Representative: Studio Torta S.p.A.

(57) **Abstract**

A microelectromechanical sensor (1) includes: a supporting body (2), containing semiconductor material; and a cap (3), of semiconductor material, coupled to the supporting body (2) and having an internal surface (3a) arranged facing the supporting body (2) and a plurality of inlet holes (5). The sensor (1) further includes a sensing structure (6), comprising a measuring chamber (9) and a sensitive element (8), the sensitive element (8) being formed at least partially in the supporting body (2) and facing the measuring chamber (9); fluidic paths (10) configured to couple the sensing structure (6) with the environment external to the sensor through the inlet holes (5), and having an access section (15) to the measuring chamber (9); and trapping structures (12), defined in the supporting body (2). The trapping structures (12) are in communication with respective fluidic paths (10) and extend in the supporting body (2) at least partially at a greater distance, from the internal surface (3a) of the cap (3), with respect to the access section (15) of each fluidic path (10).

## Description

### Technical Field

The present invention relates to a microelectromechanical sensor with external fluidic coupling having contamination-reducing structure.

### Background

Environmental quantity sensors, such as MEMS (micro-electro-mechanical) barometric pressure sensors, humidity sensors, and chemical detectors and sensors, generally comprise a sensing element packaged in a case and connected to the external environment through one or more inlet holes in the case and internal fluidic paths, to receive the quantity to be measured. In MEMS pressure sensors, for example, the sensing element is often defined by a membrane that is deformable in response to variations in external pressure: in this case, a pressure signal may be read, in a capacitive or resistive manner, with respect to a/an (internal) reference pressure. Inlet holes and internal fluidic paths allow external pressure variations to propagate up to the sensing element.

In addition to ensuring fluidic coupling with the outside, however, the inlet holes may also allow potentially harmful particles, such as grains of dust, to reach the sensing element of the sensor through internal fluidic paths. Contaminating particles may affect the functionalities of the sensor, for example by modifying the capacitances between conductive paths and/or creating drifts of the sensing elements.

To overcome the issue of contamination by particles, a dedicated design of the inlet holes is often used, both in terms of position (for example, at a sufficient distance from the sensing elements) and in terms of number and dimensions. However, there are constraints that may limit the effectiveness of measures of this kind. For example, reducing the number of inlet holes may not be compatible with the desirable redundancy for this type of sensors, while too small dimensions may more easily cause obstruction of the inlet holes both due to the characteristics of current manufacturing processes, and because particle accumulation is more likely.

### Summary

It is therefore an aim of the present invention to overcome or at least in part mitigate the disadvantages and limitations of the state of the art.

According to the present invention, a microelectromechanical sensor with external fluidic coupling as defined in the attached claims is presented.

### Brief Description of the Figures

For a better understanding of the present invention, preferred embodiments are presented, by way of non-limiting example, with reference to the attached drawings, wherein:
- Figure 1 schematically shows, in a cross-section, a MEMS sensor in accordance with an embodiment of the present invention;
- Figure 2 schematically shows, in a top-plan view, the MEMS sensor of Figure 1;
- Figures 3a-3b schematically show consecutive steps of a manufacturing process of the MEMS sensor of Figure 1;
- Figure 4 schematically shows, in a cross-section, a MEMS sensor in accordance with a different embodiment of the present invention;
- Figure 5 schematically shows, in a top-plan view, the MEMS sensor of Figure 4;
- Figure 6 schematically shows, in a top-plan view, an enlarged portion of the MEMS sensor of Figure 4; and
- Figures 7a-7c schematically show consecutive steps of a manufacturing process of the MEMS sensor of Figure 4.

### Description of Embodiments

The following description refers to the arrangement shown in the drawings; consequently, expressions such as "above", "below", "upper", "lower", "top", "bottom", "right", "left" and the like relate to the attached Figures and are not to be interpreted in a limiting manner.

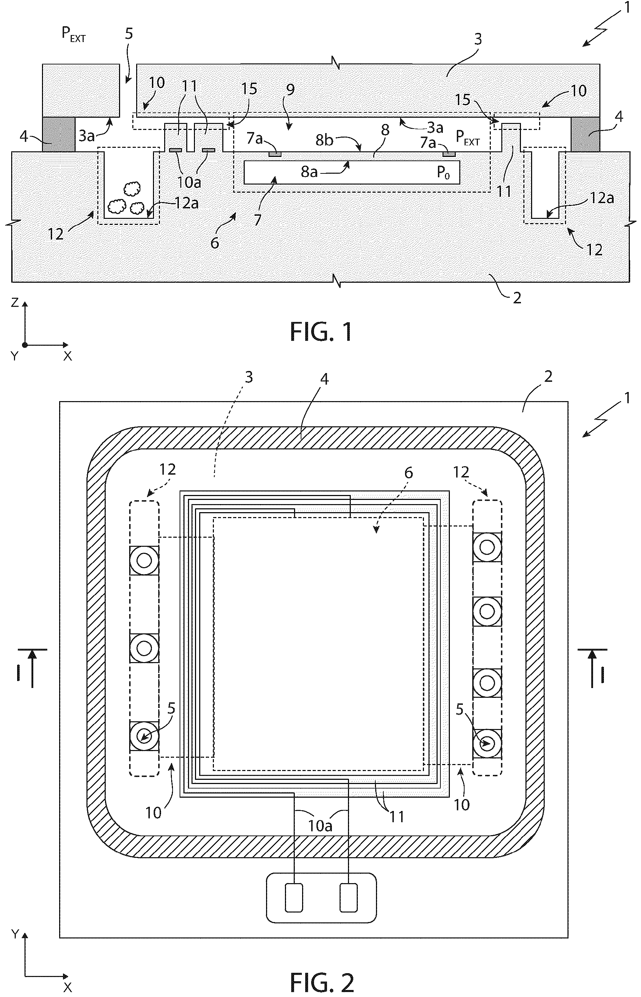

Figures 1 and 2 illustrate a portion of a microelectromechanical (MEMS) sensor with external fluidic coupling, for example a barometric pressure sensor (or simply, pressure sensor), in accordance with an embodiment of the present invention and indicated as a whole with the number 1. The pressure sensor 1 comprises a supporting body 2, containing semiconductor material (for example intrinsic and/or doped silicon), and a cap 3, also of semiconductor material. The cap 3 overlies the supporting body 2 and has an internal surface 3a arranged facing the supporting body 2. The cap 3 is also bonded to the supporting body 2 by a bonding ring 4. A thickness of the bonding ring determines a distance between the cap 3 and the supporting body 2. Considering a reference system of orthogonal axes X, Y, Z, the supporting body 2 and the cap 3 have a substantially planar shape parallel to the XY plane and are stacked in the direction of the Z axis.

The supporting body 2 accommodates a sensing structure 6 which occupies a substantially central position in the pressure sensor 1. The sensing structure 6 is in communication with the environment external to the pressure sensor 1 by a plurality of inlet holes 5, also known as vent holes or "chimneys", arranged, for example, along at least one lateral region of the pressure sensor 1.

The inlet holes 5 are through holes traversing the cap 3 and communicate directly with the environment external to the pressure sensor 1. In a non-limiting embodiment, the inlet holes 5 have a circular section and are organized in two rows parallel to the Y axis. In practice, the supporting body 2, the cap 3 and the bonding ring 4 delimit a volume which is accessible from the outside through the inlet holes 5, which allow the external pressure P_{EXT} (for example the atmospheric pressure) and/or other physical parameters (such as, for example, humidity) to reach the supporting body 2.

In view of the above, the sensing structure 6 is surrounded by the two rows of inlet holes 5. The sensing structure 6 comprises in detail: a reference chamber 7, permanently sealed with respect to the external environment and maintained at a reference pressure (internal pressure, P₀); a membrane 8 of semiconductor material, arranged above the reference chamber 7; and a measuring chamber 9, extending above the membrane 8 on a side opposite to the reference chamber 7 and in fluidic coupling with the external environment. Even more in detail, the membrane 8 is interposed between the reference chamber 7 and the measuring chamber 9 and has a lower face 8a, arranged facing the reference chamber 7, and an upper face 8b, arranged facing the measuring chamber 9. The reference chamber 7 is a buried cavity in the supporting body 2.

The membrane 8 is suspended on the reference chamber 7, for example by fixed anchors (not shown separated in Figure 1 for simplicity), so that the deformations of the membrane 8 may occur along the direction parallel to the Z axis and therefore perpendicular to the supporting body 2: as the external pressure varies with respect to the pressure of the reference chamber 7, i.e. as the pressure on the upper face 8b varies, the membrane 8 is free to deform and the deformation may be read by exploiting electrical phenomena. For example, the membrane 8 is provided with piezoelectric sensing structures - comprising implanted piezoresistances 7a - which respond to deformations of the same membrane 8. In an alternative embodiment (not shown), the membrane 8, that is conductive and suitably insulated from the supporting body 2, may be capacitively coupled to reference electrodes placed at the base of the reference chamber 7; in this case, an offset of the lower face 8a of the membrane 8 causes a variation in the capacitive coupling detectable at external terminals.

The measuring chamber 9 of the sensing structure 6 is in communication with the environment external to the pressure sensor 1 by the inlet holes 5 and respective fluidic paths 10. In detail, each fluidic path 10 is delimited, at least in part, at the bottom by the supporting body 2 and at the top by the cap 3 and fluidically connects the measuring chamber 9 with a respective row of inlet holes 5.

The supporting body 2 below each fluidic path 10 has protrusions towards the cap 3, made by using high-topography and referred to as barriers 11. The barriers 11 have respective top surfaces that define a minimum thickness, along the Z axis and starting from the internal surface 3a of the cap 3, of each fluidic path 10: this minimum thickness is selected (for example, about 1µm) so as to reduce the probability that contaminating particles (for example, with dimensions comprised between 0.5pm and 10pm) enter the sensing structure 6 without affecting the fluidic coupling with the outside. Furthermore, the barriers 11 force the collection of any contaminating particles in dedicated reservoirs, as explained hereinbelow. Conductive lines 10a for connecting the pressure sensor 1 may be embedded in the barriers 11 as in Figure 1 or extend over the same barriers 11.

With reference to Figure 1, the fluidic paths 10 of the pressure sensor 1 have an access section 15 to the sensing structure 6, and more particularly, to the measuring chamber 9. The access section 15 is a cross-section of terminal passage of the fluidic paths 10 facing the measuring chamber 9. In the example of Figure 1, end portions of the fluidic paths 10 towards the measuring chamber 9 are in common and the access section 15 is also in common. In the pressure sensor 1, the access sections 15 are for example delimited at the top by the cap 3 and at the bottom by the barriers 11 of the supporting body 2 and are immediately adjacent to the measuring chamber 9.

The supporting body 2 also accommodates trapping structures 12 configured to locally collect and retain contaminating particles coming from the environment external to the pressure sensor 1. In one embodiment, the trapping structures 12 of the pressure sensor 1 are confinement trenches having an elongated shape parallel to the Y axis defined in the supporting body 2. The trapping structures 12 run in a continuous manner each below a respective row of inlet holes 5 and in the embodiment of Figures 1 and 2 (where two are shown) extend along opposite sides of the sensing structure 6. In a non-limiting embodiment, the trapping structures 12 are aligned along the Z axis with the respective rows of inlet holes 5. More generally, the trapping structures 12 are defined in the supporting body 2 in proximity to respective inlet holes 5.

Each trapping structure 12 is in fluidic communication with the respective inlet holes 5 and with the respective fluidic path 10. In detail, each trapping structure 12 is defined along a section of the respective fluidic path 10. With reference, in particular, to Figure 1, each trapping structure 12 has a bottom surface 12a and forms below a respective inlet hole 5 and a respective fluidic path 10 a collection reservoir for the contaminating particles entering the pressure sensor 1 through this inlet hole 5.

Again with reference to Figure 1, the trapping structures 12 extend in the supporting body 2 along the Z axis up to a greater depth with respect to the access sections 15 of the respective fluidic paths 10. More in detail, the bottom surface 12a of each trapping structure 12 is located at least partially at a greater depth - measured starting from the internal surface 3a of the cap 3 - with respect to respective top surfaces of the barriers 11 and, in particular, with respect to the access sections 15 of the fluidic paths 10. In a non-limiting embodiment, the bottom surface 12a of each trapping structure 12 is located, in addition, at a greater depth with respect to the upper face 8b of the membrane 8. Furthermore, each trapping structure 12 has, transversely to the Z axis, greater dimensions with respect to corresponding dimensions of the inlet holes 5; more generally, each trapping structure 12 has sections that facilitate the accumulation of contaminants. The fluidic paths 10 of the pressure sensor 1 therefore show a high resistance to the passage of contaminating particles, while the trapping structures 12 show a high capacity to retain them.

In the MEMS pressure sensor of the present invention, therefore, the contaminating particles coming from the external environment tend to accumulate in the trapping structures and are hindered in a possible journey, through the fluidic paths, towards the sensing structure. In the pressure sensor, the probability that contaminating particles deposit in proximity to the membrane is therefore significantly reduced, limiting variations in the electromechanical parameters during the life of the sensor. The pressure sensor of the present invention ultimately has more reliable measuring performance and repeatability.

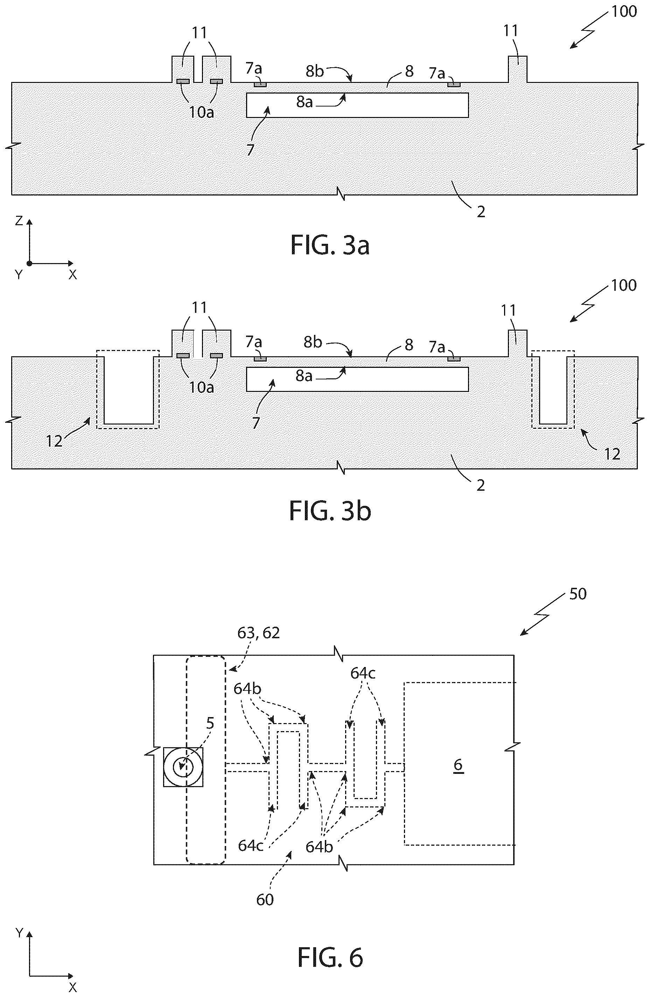

The trapping structures 12 may be formed, within the manufacturing process of the pressure sensor 1, in a step following the formation and patterning of the supporting body 2, as generically shown in Figures 3a and 3b. With reference to Figure 3a, in a work wafer 100 comprising the supporting body 2 of the pressure sensor 1, a buried cavity corresponding to the reference chamber 7 is first created according to techniques known in the sector (for example by using sacrificial layers, removed following the formation of the upper semiconductor layers, releasing the region corresponding to the buried cavity); the membrane 8, the conductive lines 10a, the implanted piezoresistances 7a and the barriers 11 are then defined.

Subsequently (Figure 3b), exploiting a special trench mask, not shown, the trapping structures 12 of the pressure sensor 1 are formed by using for example an anisotropic etching. This anisotropic etching may be divided into consecutive and mutually different steps; for example, time-etchings and/or etchings with different etching chemistries may be used depending on the depth and the width of the trenching to be formed and the material to be removed in the supporting body 2.

The cap 3 is subsequently bonded to the supporting body 2 by the bonding ring 4; the inlet holes 5 are finally formed, for example in a vertically aligned manner with the respective trapping structures 12 and by using selective etchings, thereby obtaining the pressure sensor 1 of Figures 1 and 2.

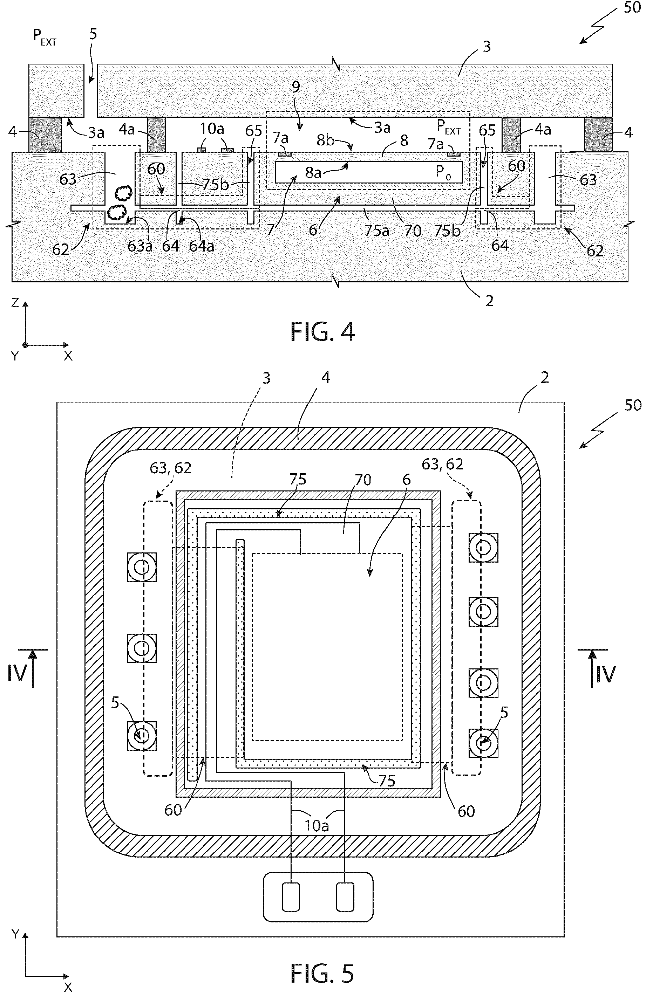

Figures 4 and 5 illustrate a portion of a MEMS barometric pressure sensor (or simply, pressure sensor) in accordance with a different embodiment of the present invention and indicated as a whole with the number 50. Elements of Figures 4 and 5 which correspond to elements of Figures 1 and 2 are illustrated with the same reference numbers. Furthermore, the pressure sensor 50 is described hereinbelow with reference to the differences with respect to the pressure sensor 1.

The pressure sensor 50 comprises a platform (also known as "decoupling mass") 70 which at least partially accommodates the sensing structure 6. The platform 70 is suspended with respect to the supporting body 2 by flexures (not shown in Figures 4 and 5) and is separated from the supporting body 2 by a separation region 75. In a non-limiting embodiment, the separation region 75 is a trench which surrounds the platform 70 and has a substantially spiral shape in sections along planes parallel to the XY plane. A first portion 75a of the separation region 75 extends below and at least for the entire dimension of the platform 70. Second portions 75b of the separation region 75 extend transversely to the first portion 75a (here parallel to the Z axis) and are communicating therewith.

In the pressure sensor 50, the platform 70 improves the rejection of thermomechanical stresses, due for example to the packaging steps and/or the soldering steps of the pressure sensor.

The measuring chamber 9 of the sensing structure 6 is in communication with the environment external to the pressure sensor 50 by the inlet holes 5 and respective fluidic paths 60. In detail, each fluidic path 60 of the pressure sensor 50 is, at least for a section, buried in the supporting body 2 and connects from the fluidic point of view the measuring chamber 9 with a respective row of inlet holes 5. In one embodiment, the second portions 75b of the separation region 75 define a common portion of the fluidic paths 60. In the present embodiment, the bonding ring 4 comprises an internal element 4a which surrounds the platform 70: the presence of the internal element 4a causes the measuring chamber 9 to be coupled to the outside, to receive the pressure P_{EXT}, only by fluidic paths that traverse the supporting body 2, as described.

With reference to Figure 4, the fluidic paths 60 of the pressure sensor 50 have an access section 65 to the sensing structure 6, and more particularly, to the measuring chamber 9. The access section 65 is a cross-section of terminal passage of sections of the fluidic paths 60 corresponding to the second portions 75b of the separation region 75. In the example of Figure 4, end portions of the fluidic paths 60 towards the measuring chamber 9 are in common and the access section 65 is also in common, which has the spiral shape of the separation region 75 in sections along planes parallel to the XY plane (the access section 65 is in fact the section of the separation region 75 in the plane parallel to the XY plane at the level of the upper face 8b of the membrane 8 and faces the measuring chamber 9). In other words, the fluidic paths 60 communicate with the measuring chamber 9 through respective access sections 65.

The supporting body 2 of the pressure sensor 50 also accommodates trapping structures 62 configured to locally collect and retain contaminating particles coming from the external environment. In detail, the trapping structures 62 of the pressure sensor 50 are defined in the supporting body 2 and each comprise a trench portion 63 and a connecting portion 64 in communication with each other. Furthermore, the trapping structures 62 are defined in proximity to respective inlet holes 5.

The trench portion 63 of each trapping structure 62 has an elongated shape parallel to the Y axis and runs in a continuous manner below a respective row of inlet holes 5 (for example, vertically offset with respect to the respective row of inlet holes 5). In Figures 4 and 5 the trench portions 63 (two shown) of the trapping structures 62 extend along opposite sides of the sensing structure 6. In section, the trench portions 63 extend parallel to the Z axis, each being interposed between a respective row of inlet holes 5 and a respective fluidic path 60.

The connecting portion 64 of each trapping structure 62 is defined at least in part in the respective fluidic path 60. In detail, each connecting portion 64 extends between the respective trench portion 63 and separation region 75 and comprises traps extending downward. In a non-limiting embodiment, bottom surfaces 63a of the trench portions 63 and bottom surfaces 64a of the connecting portions 64 are located at a same depth with respect to a reference plane, for example with respect to the internal surface 3a of the cap 3. However, it is understood that the bottom surfaces 63a, 64a may be located at different depths depending on the type of trenching formed in the supporting body 2 (see the detail of the manufacturing process hereinbelow).

In the light of the above, each trapping structure 62 is in fluidic communication with the respective inlet holes 5 and with the respective fluidic path 60. With reference in particular to Figure 4, each trapping structure 62 forms below a respective inlet hole 5 and a respective fluidic path 60 collection reservoirs for the contaminating particles entering the pressure sensor 50 through this inlet hole 5.

Again with reference to Figure 4, each trapping structure 62 extends at least partially - along the Z axis and starting from the cap 3 - to a greater depth with respect to each access section 65 of respective fluidic paths 60. More in detail, the bottom surfaces 63a, 64a of each trapping structure 62 are located at least partially at greater depths - measured starting from the internal surface 3a of the cap 3 - with respect to the upper face 8b of the membrane 8, and consequently also with respect to the access sections 65. Furthermore, the trench portions 63 of the trapping structures 62 have a greater width, along the X axis, with respect to the diameter of the inlet holes 5; more generally, each trapping structure 62 exhibits sections that facilitate the accumulation of contaminants. The fluidic paths 60 of the pressure sensor 50 therefore show a high resistance to the passage of contaminating particles, while the trapping structures 62 show a high capacity to retain them.

With reference to Figure 6, the fluidic paths 60 and, in particular, the connecting portions 64 of the trapping structures 62, of the pressure sensor 50 may be formed in the supporting body 2 and develop parallel to the XY plane along tortuous paths. In one embodiment, for example, the connecting portions 64 of the trapping structures 62 have elbows 64b and blind branches 64c. Such a fluidic coupling of the sensing structure 6 with the inlet holes 5 makes the insulation of the membrane 8 further robust with respect to contamination by particles: the latter, in fact, have a further reduced probability of reaching the sensitive elements of the pressure sensor.

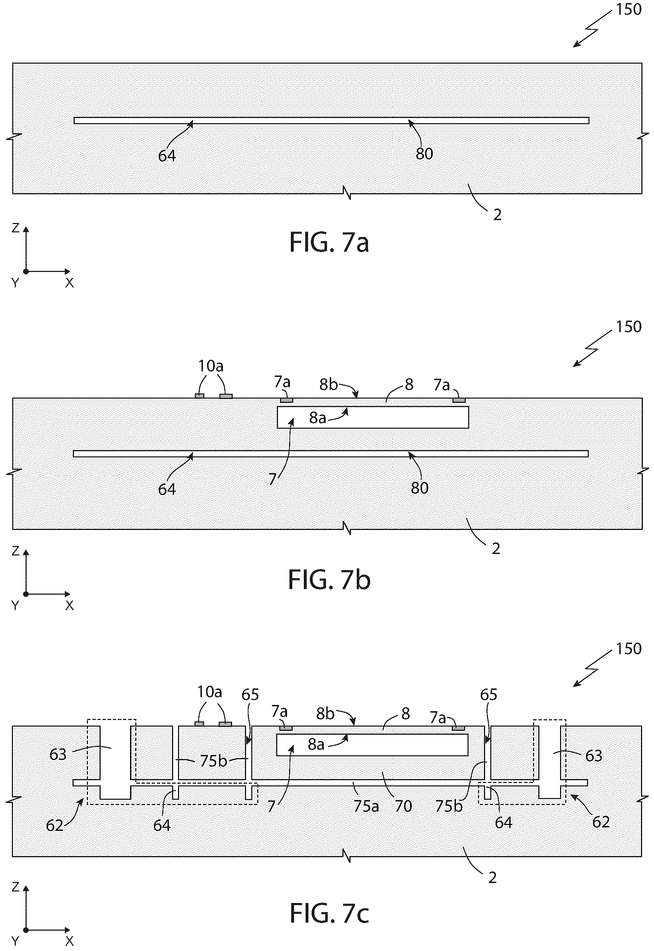

The trapping structures 62 may be formed, within the manufacturing process of the pressure sensor 50, when the platform 70 is defined by opening the separation region 75, as generically shown in Figures 7a-7c. With reference to Figure 7a, first a work wafer 150 comprising the supporting body 2 of the pressure sensor 50 is processed in order to create a buried cavity 80 and the connecting portions 64 of the trapping structures 62 by etching steps not shown, epitaxial growth and annealing. In particular, in the etching step, the connecting portions 64 and, in a region corresponding to the buried cavity 80, structures separated by trenches (for example walls or pillars) may be defined. During the epitaxial growth, the trenches close without being filled and during the annealing the silicon is redistributed forming the buried cavity 80. Subsequently (Figure 7b), the reference chamber 7, the membrane 8, the conductive lines 10a and the implanted piezoresistances 7a are formed, as previously explained.

Therefore referring to Figure 7c, exploiting a specific mask (not shown), the work wafer 150 is selectively etched (for example by anisotropic etchings) at least up to the buried cavity 80 and to the connecting portions 64 of the trapping structures 62 so as to define the first portion 75a, the second portions 75b of the separation region 75 and the elastic elements that keep the platform 70 suspended with respect to the supporting body 2, thus releasing the platform 70. At the same time, and without the use of further masks or steps, the trapping structures 62 of the pressure sensor 50 and in particular the trench portions 63 are formed.

The cap 3 is subsequently bonded to the supporting body 2 by the bonding ring 4; the inlet holes 5 are finally formed, for example by using selective etchings, thereby obtaining the pressure sensor 50 of Figures 4 and 5.

Finally, it is clear that modifications and variations may be made to what has been described and illustrated herein without thereby departing from the scope of the present invention, as defined in the attached claims.

For example, the sensing structure may comprise more than one piezoelectric membrane and/or elements sensitive to pressure variations of a nature different from what has been shown. More generally, the sensing structure may be different and may be able to sense different physical quantities, such as, for example, humidity.

Furthermore, the inlet holes of the pressure sensor may be different from what has been shown, for example may have different geometry and/or be in different number and/or organized in a different geometric arrangement in the cap: the inlet holes may be for example organized in three rows surrounding the sensing structure on three distinct sides.

Still fulfilling the function of fluidic communication between inlet holes and sensing structure, the fluidic paths may be different from what has been previously described, for example the fluidic paths may be formed with geometries which in cross-section and in top-plan view are different from those shown in the attached Figures.

As to the trapping structures, the trenches may be formed with geometries which in cross-section may be different from those shown depending on the desired degree of contaminant accumulation. Or again, trenches may surround the sensing structure even in regions of the pressure sensor where inlet holes are absent.

In a variant not illustrated, the sensing structure is formed on a platform but the fluidic coupling between the inlet holes and the measuring chamber also, or only, occurs by fluidic paths delimited by the cap and the supporting body; in such a variant, the trapping structures may be characterized for example by the absence of connecting portions.

## Claims

1. A microelectromechanical sensor (1; 50) comprising:
- a supporting body (2), containing semiconductor material;
- a cap (3), of semiconductor material, bonded to the supporting body (2) and having an internal surface (3a) arranged facing the supporting body (2) and a plurality of inlet holes (5);
- a sensing structure (6), comprising a measuring chamber (9) and a sensitive element (8), the sensitive element (8) being formed at least partially in the supporting body (2) and facing the measuring chamber (9);
- fluidic paths (10; 60) configured to couple the sensing structure (6) with the environment external to the sensor through the inlet holes (5), and having an access section (15; 65) to the measuring chamber (9);
- trapping structures (12; 62), defined in the supporting body (2),
wherein the trapping structures (12; 62) are in communication with respective fluidic paths (10; 60) and extend in the supporting body (2) at least partially at a greater distance, from the internal surface (3a) of the cap (3), with respect to the access section (15; 65) of each fluidic path (10; 60).

2. The sensor (1; 50) according to claim 1, wherein the inlet holes (5) are organized in rows which surround the sensing structure (6) on opposite sides.

3. The sensor (1) according to claim 1 or 2, wherein the trapping structures (12) comprise trenches extending in the supporting body (2) vertically aligned with respective inlet holes (5).

4. The sensor (1) according to any of the preceding claims, wherein the fluidic paths (10) are delimited, at least partially by the supporting body (2) and the cap (3), and are interposed between respective inlet holes (5) and the sensing structure (6).

5. The sensor (1) according to any of the preceding claims, wherein the trapping structures (12) are defined along sections of the respective fluidic paths (10).

6. The sensor (50) according to any of the preceding claims, further comprising a platform (70), suspended with respect to the supporting body (2), wherein the sensing structure (6) is at least partially formed.

7. The sensor (50) according to claim 6, wherein the trapping structures (62) each comprise a trench portion (63) and a connecting portion (64) in communication with each other; and wherein the trench portions (63) extend in the supporting body (2) and the connecting portions (64) are interposed between respective trench portions (63) and the platform (70) .

8. The sensor (50) according to claim 7, wherein the fluidic paths (60) are at least partially defined in the supporting body (2) and are each interposed between respective inlet holes (5) and the sensing structure (6), and
wherein each connecting portion (64) of the trapping structures (62) is defined at least partially in the respective fluidic path (60).

9. The sensor (50) according to any of claims 6 to 8, wherein the fluidic paths (60) develop in a plane (XY) parallel to the internal surface (3a) of the cap (3) along tortuous paths.

10. The sensor (50) according to any of claims 6 to 9, wherein the fluidic paths (60) have elbows (64b) and blind branches (64c).

11. The sensor (1; 50) according to any of the preceding claims, wherein the sensing structure (6) is sensitive to pressure variations in the environment external to the sensor and comprises a reference chamber (7), and wherein the sensitive element comprises a membrane (8) interposed between the reference chamber (7) and the measuring chamber (9); the reference chamber (7) being a buried cavity in the supporting body (2), and the measuring chamber (9) being delimited by the supporting body (2) and the cap (3) and being in fluidic coupling with the environment external to the sensor.

12. The sensor (1; 50) according to claim 11, wherein each trapping structure (12; 62) has a respective bottom surface (12a; 63a, 64a) at a greater distance from the internal surface (3a) of the cap (3) with respect to the membrane (8) of the sensing structure (6).

13. A process for manufacturing a microelectromechanical sensor (1; 50) comprising:
- in a supporting body (2), containing semiconductor material, defining:
a sensing structure (6), comprising a measuring chamber (9) and a sensitive element (8) facing the measuring chamber (9);
fluidic paths (10; 60) having an access section (15; 65) to the measuring chamber (9); and
trapping structures (12; 62) in communication with respective fluidic paths (10; 60);
- bonding a cap (3) of semiconductor material to the supporting body (2), the cap (3) having an internal surface (3a) arranged facing the supporting body (2);
- forming in the cap (3) a plurality of inlet holes (5) in fluidic communication with respective fluidic paths (10; 60);
wherein the trapping structures (12; 62) extend in the supporting body (2) at least partially at a greater distance, from the internal surface (3a) of the cap (3), with respect to the access section (15; 65) of each fluidic path (10; 60) .

14. The manufacturing process according to claim 13, wherein defining the sensing structure (6) comprises forming a platform (70) suspended with respect to the supporting body (2), and
wherein forming the platform (70) comprises:
- forming in the supporting body (2) a buried cavity (80) and portions (64) of the fluidic paths (60); and
- selectively etching the supporting body (2) at least up to the buried cavity (80) so as to free the platform (70), the trapping structures (62) each being defined at least partially in a respective fluidic path (60).
